# EUROPÄISCHE PATENTANMELDUNG

(11) **EP 2 224 205 A1**
(43) Veröffentlichungstag der Anmeldung: **01.09.2010**
(21) Anmeldenummer: 09153608.6
(22) Anmeldetag: 25.02.2009
(51) Int. Cl.: G01C 1/04, G01C 1/06, G01C 5/00, G01C 15/00, G01C 15/06

(54) **Nivelliergerät und Verfahren zum Nivellieren**

(71) Anmelder: Leica Geosystems AG, 9435 Heerbrugg (CH)
(72) Erfinder: Lais, Josef, CH-9437, Marbach (CH)
(74) Vertreter: Kaminski Harmann

(57) **Zusammenfassung**

Die Erfindung betrifft ein Nivelliergerät (1) mit einer Ausrichtungsachse (2), welche zur Höhenbestimmung auf eine Messlatte (5) ausrichtbar ist, einem Abbildungsobjektiv (7), dem eine Objektivhauptebene (8) zugeordnet ist, einem Detektor (11), mit einer in einer Bildebene (12) liegenden Aufnahmeoberfläche (10), und einer Auswertungsvorrichtung (16), die mit dem Detektor (11) verbunden ist. Durch das Abbildungsobjektiv (7) sind dabei Objekte innerhalb eines Erfassungsbereichs (18) auf die Aufnahmeoberfläche (10) des Detektors (11) abbildbar und durch die Auswertungsvorrichtung (16) unter Verwendung der Detektorinformation eine Höheninformation zu einem abgebildeten Objekt bereitstellbar.

Erfindungsgemäss sind das Abbildungsobjektiv (7) und der Detektor (11) derart ausgebildet sowie derart relativ zueinander und zu einer die Ausrichtungsachse (2) enthaltenden Objektebene (6) angeordnet, dass gleichzeitig sämtliche innerhalb des Erfassungsbereichs (18) liegende Punkte der Objektebene (6) scharf auf der Aufnahmeoberfläche (10) des Detektors (11) abgebildet werden.

## Beschreibung

Die Erfindung bezieht sich auf ein Nivelliergerät nach dem Oberbegriff des Anspruches 1 und ein Verfahren zum Nivellieren bzw. Vermessen nach dem Oberbegriff des Anspruches 12.

Beim Vermessen bzw. Nivellieren werden Nivelliergeräte zusammen mit Messlatten eingesetzt. Ein Nivelliergerät umfasst ein Messfernrohr und eine Einrichtung beispielsweise in der Form einer Libelle, welche die im Wesentlichen horizontale Ausrichtung der optischen Achse des Messfernrohrs gewährleistet. Wenn das Nivelliergerät auf einem Dreifuss montiert ist, so kann mit drei verstellbaren Fussschrauben des Dreifusses der Messhorizont hergestellt werden, indem die Libelle eingespielt wird. Nebst der Grobhorizontierung mit einer Dosenlibelle kann auch eine Feinhorizontierung durchgeführt werden, wobei beispielsweise eine genauere Röhrenlibelle eingesetzt wird. Mit Hilfe eines Kompensators ist es möglich die Zielachse des Nivelliergerätes auch ohne Präzisionslibelle zu horizontieren. Zumindest ein Teil der Restneigung des Zielstrahles, die nach der Vorhorizontierung mit der Dosenlibelle verbleibt, wird unter Ausnützung der Schwerkraft durch den Kompensator ausgeglichen. Der Kompensator kann unerwünschte Schwingungen mit einer Dämpfung schwächen.

Beim Blick durch das Fernrohr auf die Nivellierlatte kann der lotrechte Abstand zwischen dem Lattenaufsatzpunkt und dem Horizont ermittelt werden. Nivellierlatten weisen beispielsweise eine Höhe von 4 m auf. Zumindest auf einem Längsbereich befindet sich ein genauer Massstab. Der Nullpunkt der Teilung ist der Lattenaufsatzpunkt. Es sind dabei verschiedene Ausführungen für Nivellierlatten bekannt, wobei diese beispielsweise auf der Rückseite eine Dosenlibelle und einen Griff aufweisen können. Durch Einspielen der Libelle wird die Latte lotrecht gehalten. Es gibt auch Latten, die mindestens eine weitere Teilung umfassen.

In Kombination mit digitalen Nivelliergeräten, welche den anvisierten Bereich auf einen Sensorarray abbilden und eine Auswertung dieser Abbildung durchführen, werden entsprechende Digitalnivellierlatten eingesetzt. Eine solche Messlatte kann vom Gerät automatisch abgelesen und die Daten können ausgewertet und gespeichert werden. Um das Nivellieren zu automatisieren, sind - neben den Auswerte- und Speicherelementen des Nivelliergerätes - auch Messlatten mit mindestens einer automatisch auswertbaren Codierung erforderlich.

Bei den bekannten digitalen Nivelliergeräten umfasst das Fernrohr zumindest ein Objektiv, eine Fokussiereinrichtung, einen Strahlteiler, ein Strichkreuz, ein Okular und einen Detektor mit dem Sensorarray. Mit dem optischen System kann bereits eine Lattenablesung von Auge erfolgen. Da ein Teil des Lichtes im Strahlteiler auf einen Detektor für die elektronische Bildumwandlung umgelenkt wird, kann die Datenerfassung auch automatisch erfolgen. Der Strahlteiler kann z.B. derart als Bandpassfilter ausgebildet sein, dass für das Auge wichtige Spektralbereiche der elektromagnetischen Strahlung zum Okular weitergeleitet und andere spektrale Anteile dem Sensorarray zugeführt werden.

Der Messablauf wird durch eine Prozessoreinheit gesteuert, die nicht nur die Messung in Echtzeit auswertet, sondern auch Korrekturen anbringen kann, welche von den Umgebungsbedingungen - beispielsweise von der Temperatur - abhängen, wofür verschiedene Auswertealgorithmen bekannt sind. Die meisten verwenden dabei einen Abschnitt der Teilung und bestimmen neben der anvisierten Höhe auch eine Distanz.

Vom Detektor wird das empfangene codierte Muster der Latte in digitale Daten umgewandelt. Weiters wird die Position der Fokussierlinse durch den Fokusgeber aufgezeichnet. Aus dieser Stellung lässt sich die ungefähre Distanz zwischen Gerät und Latte ermitteln. In einem Entfernungsbereich von 1,80 m bis 100 m verschiebt sich die Fokussierlinse beispielsweise um ca. 14 mm. Bei den bekannten Lösungen wird die aus der Ermittelung der Position der Fokussierlinse abgeleitete Distanz nicht genügend genau bestimmt. Zudem ist das Verstellen der Fokussierlinse zeitaufwändig.

Beim Vermessen mit einem digitalen Nivelliergerät muss im ersten Schritt wie bei einem herkömmlichen Verfahren die Nivellierlatte angezielt und fokussiert werden. Nachdem die Messtaste betätigt wurde, wird die Stellung der Fokussierlinse registriert und der Kompensator überwacht. Im darauf folgenden Schritt wird die Zielhöhe und die Distanz näherungsweise bestimmt. Schliesslich wird im letzten Schritt die genaue Höhe und der Abstand mit Auswertungs- insbesondere Korrelationsverfahren ermittelt. Um eine Korrelation durchführen zu können, muss ein Referenzsignal gespeichert sein, welches der Abbildung der Nivellierlatte entspricht. Die Höhe kann beispielsweise ermittelt werden, indem das Messsignal so lange verschoben wird, bis Referenzsignal und Messsignal bestmöglich übereinstimmen. Die Verschiebung des Messsignals entspricht der gesuchten Höhe. Weil das Messsignal in Abhängigkeit von der Entfernung unterschiedlich gross abgebildet wird, muss zuvor der Massstab des Messsignals an den Massstab des Referenzsignals angeglichen werden.

Digitale Nivelliergeräte sind beispielsweise aus den Patentschriften DE 36 18 513 C2, DE 198 33 996 C1, EP 1 066 497 B1 und DE 198 04 198 B4 bekannt, wobei die Detektoren der letzten beiden Schriften zweidimensionale Sensorarrays umfassen. Die EP 0 066 497 B1 beschreibt ein Auswertungsverfahren bei dem eine schiefe Lage der Messlatte ermittelt bzw. kompensiert wird. Zudem wird für eine genaue Entfernungsbestimmung ein zusätzlicher Entfernungsmesser vorgeschlagen, was den Geräte- und Auswertungsaufwand erhöht. Die DE 198 04 198 B4 beschreibt Ausführungsformen, bei denen die Bildsignale mittels Fouriertransformationen ausgewertet werden, was die Korrelation mit dem Referenzsignal der Messlatte verbessert.

EP 0 808 447 B1 beschreibt eine Vorrichtung, bei der die Abbildungsoptik eine Mehrzahl von unterschiedlich abbildenden Pupillenzonen aufweist, welchen ortsauflösende optoelektronische Detektoren oder Teilbereiche eines ortsauflösenden optoelektronischen Detektors zugeordnet sind, sodass die Abbildungsoptik eine simultane Abbildung aus unterschiedlichen Entfernungsbereichen ermöglicht. Der Aufbau dieser Vorrichtung ist relativ aufwändig und es gibt Abstandsbereiche, die von keiner Pupillenzone scharf abgebildet werden.

Bei den bekannten Lösungen ist das Bereitstellen von auswertbaren Informationen einer anvisierten Messlatte unabhängig von deren Abstand zum Nivelliergerät aufwändig. Zudem können bei der Höhenbestimmung kleine Abweichungen von der horizontalen Ausrichtung des Fernrohrs bzw. des Nivelliergerätes nicht mit kleinem Aufwand korrigiert werden.

Eine Aufgabe besteht nun darin, eine Lösung zu finden, mit der auswertbare Informationen einer anvisierten Messlatte in einem grossen Abstandsbereich zum digitalen Nivelliergerät einfach bereitgestellt werden können. Insbesondere soll dabei die Abbildungsoptik weniger Fehleranfällig sein, sodass ein robusteres und präziseres Bestimmen der Höheninformation ermöglicht wird.

Ausserdem sollen als weitere, spezielle Aufgabe auch exakte Höhenwerte bestimmt werden können, wenn kleine Abweichungen von der horizontalen Ausrichtung des Nivelliergerätes auftreten.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

In einem ersten Schritt der Erfindung wurde erkannt, dass das Verfahren zum Nivellieren und das Nivelliergerät einfacher werden, wenn das Nivelliergerät eine Fernrohroptik und ein davon räumlich getrenntes Abbildungssystem mit eigener Abbildungsoptik aufweist. Dadurch wird das Bereitstellen einer auswertbaren Informationen einer anvisierten Messlatte von der Fernrohroptik und insbesondere von einer Fokussiereinrichtung des Fernrohres getrennt.

Wenn das Fernrohr nur zum Anvisieren eines Objektes (Messlattenabschnitt) aber nicht zum Ablesen der Objektinformation (Massstab) verwendet wird, so ist es nicht nötig, dass die Fernrohr-Fokussierung genau auf den Abstand zur Messlatte eingestellt wird. Gegebenenfalls wird auf ein Fokussieren verzichtet, was den Vermessungsablauf vereinfacht. Es versteht sich von selbst, dass dann anstelle eines Fernrohres auch gegebenenfalls eine Visiereinrichtung eingesetzt werden kann. Das Fernrohr oder die Visiereinrichtung definieren zumindest eine Fernrohr- bzw. Visierachse, welche als Ausrichtungsachse des Nivelliergerätes bezeichnet wird.

In einem zweiten Schritt der Erfindung wurde erkannt, dass die anhand des Abbildungssystems durchgeführten Messungen robuster und präziser werden, falls kein Verstellen der Fokusposition der Abbildungsoptik und/oder des Detektors in Abhängigkeit von einer Messlatten-Entfernung notwendig ist, da ein Verschieben von optischen Komponenten des Abbildungssystems stets die Gefahr von Abweichungen in der Fokussierlinie birgt und somit Ablauffehler auftreten können.

Bei einem erfindungsgemässen digitalen Nivelliergerät ist daher das Abbildungssystem örtlich getrennt von der Anzieleinrichtung angeordnet. Das Abbildungssystem weist dabei zumindest ein Abbildungsobjektiv auf, dem eine Objektivhauptebene zugeordnet ist, sowie einen Detektor mit einer in einer Bildebene liegenden Aufnahmeoberfläche. Die optische Achse der Anzieleinrichtung, die insbesondere als Zielfernrohr ausgeführt sein kann, bildet dabei eine Ausrichtungsachse, die zur Höhenbestimmung auf eine Messlatte ausrichtbar ist.

Die Ausbildungs- und Anordnungsweise des Abbildungsobjektivs und des nachgeordneten Detektors wird ein Erfassungsbereich des Abbildungssystems definiert als jener Winkelbereich, innerhalb wessen im Sichtfeld des Abbildungssystems befindliche Punkte auf der Aufnahmeoberfläche des Detektors abgebildet werden können.

Gemäss der vorliegenden Erfindung sind dabei das Abbildungsobjektiv und der Detektor derart ausgebildet sowie derart relativ zueinander und zu einer die Ausrichtungsachse enthaltenden Objektebene angeordnet, dass gleichzeitig sämtliche innerhalb des Erfassungsbereichs liegende Punkte der Objektebene scharf auf der Aufnahmeoberfläche des Detektors abgebildet werden.

Der Detektor ist des Weiteren mit einer Auswertungsvorrichtung verbunden, die zur Bestimmung und Bereitstellung einer Höheninformation zu einem auf der Aufnahmeoberfläche abgebildeten Objekt - unter Verwendung der Detektorinformation - ausgebildet ist.

Beispielsweise kann der erfindungsgemässe Effekt, dass entfernungsunabhängig sämtliche innerhalb des Erfassungsbereichs liegende Punkte der Objektebene scharf auf der Aufnahmeoberfläche des Detektors abgebildet werden, dadurch gewährleistet werden, dass das Abbildungsobjektiv eine einfallswinkelabhängig über den Erfassungsbereich variierende Brennweite aufweist. Z.B. kann das Abbildungsobjektiv eine Bildfeldwölbung in einer, insbesondere horizontalen, Achse aufweisen oder eine diffraktive Struktur, welche die winkelabhängige - insbesondere azimutwinkelabhängige - Variation der Brennweite des Abbildungsobjektivs erzeugt.

Alternativ dazu können das Abbildungsobjektiv und der Detektor auch derart relativ zueinander und relativ zur Anzieleinrichtung bzw. zur dadurch definierten Ausrichtungsachse angeordnet sein, dass die Objektivhauptebene, die Bildebene und die Objektebene die Scheimpflug-Bedingung erfüllen. Auch dadurch kann erfindungsgemäss gewährleistet werden, dass entfernungsunabhängig sämtliche innerhalb des Erfassungsbereichs liegende Punkte der Objektebene scharf auf der Aufnahmeoberfläche des Detektors abgebildet werden.

Insbesondere wird die Scheimpflug-Bedingung dabei erfüllt, falls sich die Objektebene, die Bildebene und die Objektivhauptebene in einer gemeinsamen Linie bzw. Geraden schneiden. D.h., falls sich die Objektivhauptebene, die Bildebene und die Objektebene, welche die Ausrichtungsachse umfasst, in einer gemeinsamen Schnittlinie schneiden, kann die gewünschte scharfe Abbildung der sich in der Objektebene befindenden Objekte ohne Verstellungsaufwand während der Messung entfernungsunabhängig gewährleistet werden. Dadurch können eine fehlerunanfällige, robuste und dennoch hochpräzise Erfassung des Messlatten-Codes und somit eine verbesserte Bestimmung der Höheninformation ermöglicht werden.

Gegenüber den aus dem Stand der Technik bekannten Lösungen hat die erfindungsgemässe Lösung somit den Vorteil, dass sie beim Wechsel von einer ersten zu einer weiteren Distanz ohne Fokussieraufwand eine Höhenablesung an einem scharf abgebildeten Code durchführen kann.

Hinsichtlich der Ausführungsform des erfindungsgemässen Nivelliergeräts, bei der sich die Objektivhauptebene, die Bildebene und die Objektebene in einer Linie schneiden, ist insbesondere zwischen der Objektebene und der Objektivhauptebene ein Winkel α und zwischen der Objektivhauptebene und der Bildebene ein Winkel β ausgebildet. Die Scheimpflugsche Regel gewährleistet, dass bei einer scharfen Abbildung eines Punktes der Objektebene auf die Bildebene, insbesondere auf die Aufnahmeoberfläche des Detektors, auch alle anderen Punkte der Objektebene, die auf die Aufnahmeoberfläche des Detektors abgebildet werden, dort scharf abgebildet sind.

Von der Schnittlinie aus liegen das Zentrum des Abbildungsobjektivs in einem Objektivabstand und das Zentrum der Aufnahmeoberfläche des Detektors in einem Detektorabstand. Die beide Zentren können sich dabei im Wesentlichen in einer gemeinsamen, die Ausrichtungsachse umfassenden Normalebene zur Schnittlinie befinden. Bei einem geringen Abstand zwischen Abbildungssystem und Zielfernrohr verläuft die Abbildungslinie von einem Punkt der Objektivebene zu einem abgebildeten Punkt auf der Aufnahmeoberfläche also unter einem spitzen Winkel zur Ausrichtungsachse.

Um zu gewährleisten, dass ein gewünschter Distanzbereich der Ausrichtungsachse auf die Aufnahmeoberfläche des Detektors abgebildet wird, müssen die Winkel α und β, der Objektivabstand, der Detektorabstand sowie die Ausdehnung der Aufnahmeoberfläche des Detektors normal zur Schnittlinie richtig entsprechend werden. Dabei wird der Abbildungsmassstab durch die Wahl der Winkel α und β bestimmt. Weil der Winkel α vorzugsweise im Bereich von 80° bis 90°, insbesondere im Wesentlichen bei 90° liegt, wird der Abbildungsmassstab im Wesentlichen vom Winkel β bestimmt.

Der Abbildungsmassstab und das Ausmass der Aufnahmeoberfläche des Detektors normal zur Schnittlinie hängen mit dem gewünschten Distanzbereich zusammen, sodass bei vorgegebenem Distanzbereich und bei einem vorgegebenen Ausmass der Aufnahmeoberfläche des Detektors normal zur Schnittlinie der Abbildungsmassstab und damit der Winkel β so gewählt werden muss, dass der gewünschte Distanzbereich auf die Aufnahmeoberfläche des Detektors abgebildet werden kann.

Nach der Wahl eines Objektivabstands kann entsprechend dem gewünschten Distanzbereich auch der für die richtige Abbildung benötigte Detektorabstand festgelegt werden.

Nach dem Festlegen der Winkel α und β, des Objektivabstands, des Detektorabstands und der Ausdehnung der Aufnahmeoberfläche des Detektors normal zur Schnittlinie kann die für eine scharfe Abbildung benötigte Brennweite des Abbildungsobjektivs festgelegt werden. Damit ein Punkt der Objektebene von einer Linse scharf auf einen Punkt der Aufnahmeoberfläche des Detektors abgebildet wird, muss bei dieser Abbildung die Gegenstandsweite g, die Bildweite b und die Brennweite f des Abbildungsobjektivs bzw. der Linse die Linsengleichung 1/f=1/g+1/b erfüllen, sodass gilt f=b*g/(b+g).

Bezüglich sämtlichen Ausführungsformen der Erfindung können ausserdem die folgenden Weiterbildungen Anwendung finden.

Weil die Brechzahl von der Ausbreitungsgeschwindigkeit des Lichtes in der Linse abhängt, ergeben sich farbabhängige Abbildungsfehler. Dies kann durch die Abstimmung der Linse auf die Farbe für die Codierung und/oder die Wahl des Frequenzbereichs, der vom Detektor erfasst wird, berücksichtigt werden.

Der Detektor umfasst vorzugsweise einen zweidimensionalen Sensorarray, welcher für ein scharf abgebildetes Objekt in einer ersten Richtung die Position auf der Ausrichtungsachse und vorzugsweise quer dazu in einer zweiten Richtung eine Höheninformation des Objektes erfasst. Die Positionsbestimmung auf der Ausrichtungsachse entspricht einer Triangulations-Distanzmessung und ist bei einer feinen Auflösung des Sensorarrays entsprechend genau. Die Bestimmung der Höheninformation kann gemäss einer beliebigen aus dem Stand der Technik bekannten Codeauswertung durchgeführt werden.

Weil aus der Triangulations-Distanzmessung die Distanz zum Objekt und aus den Abbildungsparametern des Nivelliergerätes der Abbildungsmassstab bekannt sind, kann das abgebildete Objekt für einen Vergleich mit einem gespeicherten Höhencode richtig skaliert werden, was die Auswertung erleichtert. Die Distanzbestimmung kann mit kleinerem Aufwand als bei den Lösungen gemäss dem Stand der Technik durchgeführt werden, was ein weiterer Vorteil ist. Zudem kann die Genauigkeit der Distanzbestimmung einfach erhöht werden, in dem die Auflösung des Sensorarrays in der ersten Richtung erhöht wird. Gegebenenfalls wird auch der Abbildungsmassstab durch die Wahl eines grösseren Winkels β erhöht.

Es versteht sich von selbst, dass zusätzlich auch die aus dem Stand der Technik bekannten Korrekturen bei schief stehender Messlatte durchgeführt werden können.

Ebenso ist es möglich, dass die Höheninformationen, bzw. entsprechende Codeabschnitte, quer zur Längsrichtung der Messlatte angeordnet werden und daher in der ersten Richtung des Sensorarrays abgebildet werden. Bei einer solchen Ausführungsform kann die Verwendung eines eindimensionalen Sensorarrays genügen.

Der Sensorarray ist beispielsweise als ein Diodenarray ausgebildet, wobei jedoch auch weitere dem Fachmann bekannte, flächige Sensoranordnungen mit einer Auslesung in zwei Ausleserichtung eingesetzt werden können. Vorzugsweise handelt es sich bei den Sensoren um Flächenarrays mit einer Auflösung, welche die Lage von Codestrichen erfassbar macht. Es ist ebenfalls möglich, zwischen der Aufnahmeoberfläche des Detektors und dem auswertenden Sensor eine Übertragungseinrichtung einzusetzen, welche die gewünschte Bildinformation durch eine serielle Abbildung der Aufnahmeoberfläche auf einen Sensor mit einer kleineren räumlichen Auflösung ermittelt. Eine Übertragungseinrichtung kann insbesondere auch lediglich eine optische Abbildung auf einen von der Aufnahmeoberfläche entfernten Detektor gewährleisten.

Weil auch bei einer möglichst genauen horizontalen Ausrichtung der Ausrichtungsachse diese etwas von der exakten horizontalen Richtung abweichen kann, wird vorzugsweise ein Neigungssensor mit der Auswertungsvorrichtung verbunden. Der Neigungssensor bestimmt einen Abweichungswinkel γ zwischen der Ausrichtungsachse und einer horizontalen Ausrichtungslinie in der Objektebene. Die Auswertungsvorrichtung ermittelt die Höheninformation unter Verwendung des Abweichungswinkels γ und der Position des abgebildeten Objekts auf der Ausrichtungsachse. Dadurch kann mit einfachen Mitteln eine sehr hohe Genauigkeit erzielt werden.

Wenn der Bereich entlang der Ausrichtungsachse, welcher auf die erste Aufnahmeoberfläche eines ersten Detektors abgebildet wird, nicht genügt, so kann mindestens ein weiterer Detektor eingesetzt werden, dessen weitere Aufnahmeoberfläche in einer weiteren Bildebene liegt, welche die gemeinsame Schnittlinie umfasst. Zwischen der Objektivhauptebene und der Bildebene liegt ein Winkel β'. Vorzugsweise erfolgt die Abbildung auf den zweiten Detektor durch ein weiteres Abbildungsobjektiv, dem eine weitere Objektivhauptebene zugeordnet ist, welche die gemeinsame Schnittlinie umfasst. Alternativ können jedoch auch zwei Abbildungsobjektive und nur ein Detektor verwendet werden.

Die Abbildungsparameter werden so gewählt, dass das weitere Abbildungsobjektiv Objekte eines weiteren Erfassungsbereichs auf die weitere Aufnahmeoberfläche des weiteren Detektors abbildet und die Auswertungsvorrichtung unter Verwendung der Information des weiteren Detektors eine Höheninformation zu einem abgebildeten Objekt bereitstellt.

Aufgrund der hohen Messgenauigkeit des erfindungsgemässen Nivelliergerätes gewinnt eine Kompensation der Brechungsindexschwankungen in der Luft an Bedeutung. Die Kompensation kann durch Ausnutzung der Dispersion erfolgen. Dazu ist es nötig, die gleiche Messung mit mindestens zwei Wellenlängen durchzuführen. Aus den gefundenen Messdifferenzen kann ein theoretischer Höhenwert im Vakuum extrapoliert werden.

Die Zeichnungen erläutern die Erfindung anhand von Darstellungen zum Stand der Technik und zu einem Ausführungsbeispiel der Erfindung. Dabei zeigen
- Fig. 1: eine schematische Darstellung eines horizontalen Schnittes durch eine Nivellieranordnung in einer ersten erfindungsgemässen Ausführungsform;
- Fig. 2: eine schematische Darstellung eines vertikalen Schnittes durch eine erfindungsgemässe Nivellieranordnung;
- Fig. 3: eine perspektivische Darstellung eines erfindungsgemässen Nivelliergerätes mit zwei Abbildungssystemen;
- Fig. 4: eine schematische Darstellung eines horizontalen Schnittes durch eine Nivellieranordnung in einer zweiten erfindungsgemässen Ausführungsform;
- Fig. 5: eine schematische Darstellung eines vertikalen Schnittes durch eine Nivellieranordnung zur näheren Erläuterung der in Figur 4 abgebildeten Ausführungsform; und
- Fig. 6: eine schematische Darstellung eines horizontalen Schnittes durch eine Nivellieranordnung in einer dritten erfindungsgemässen Ausführungsform.

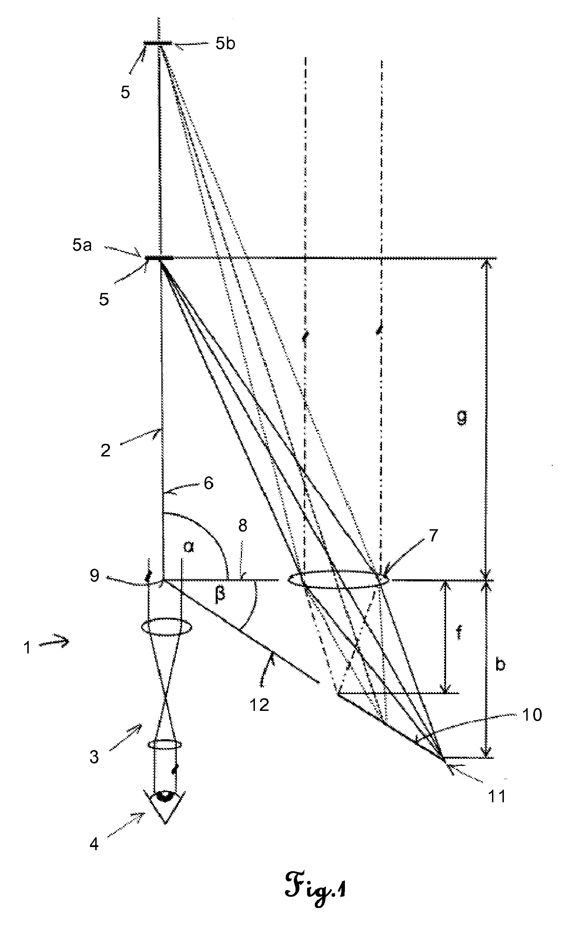

Figur 1 zeigt ein erstes, schematisch dargestelltes Beispiel für ein erfindungsgemässes Nivelliergerät 1, dessen Ausrichtungsachse 2 in der dargestellten Ausführungsform die Achse eines Fernrohrs 3 ist. Ein Benutzer 4 richtet die Ausrichtungsachse 2 auf eine Messlatte 5, die an zwei verschiedenen Positionen 5a und 5b auf der Ausrichtungsachse 2 dargestellt ist. Die vertikale Ebene mit der Ausrichtungsachse 2 wird als Objektebene 6 bezeichnet.

Ein Abbildungsobjektiv 7 ist in einer Objektivhauptebene 8 dargestellt, welche bei einer horizontal ausgerichteten Ausrichtungsachse 2 eine vertikale Ebene ist. Die Objektebene 6 und die Objektivhauptebene 8 schneiden sich in einer Schnittlinie 9 und schliessen den Winkel α zwischen sich ein.

Die Aufnahmeoberfläche 10 eines Detektors 11 liegt in einer Bildebene 12. Die Bildebene 12 schneidet die Objektivhauptebene 8 und die Objektebene 6 in der Schnittlinie 9. Zwischen der Objektivhauptebene 8 und der Bildebene 12 ist ein Winkel β ausgebildet. Durch diese Anordnung der Bildebene 12, der Objektivhauptebene 8 und der Objektebene 6 mit der gemeinsamen Schnittlinie 9 wird gewährleistet, dass alle Objekte in der Objektebene, die innerhalb eines Distanzbereiches liegen, unabhängig von ihrer Position ohne Verstellungsaufwand scharf auf die Aufnahmeoberfläche 10 abgebildet werden, wenn die scharfe Abbildung bei einer Position gewährleistet ist.

Die Scheimpflug-Bedingung ist gewährleistet und es kann daher auf eine Verstellung der Fokussierung des Abbildungsobjektivs 7 verzichtet werden. Bei einer Verschiebung der Messlatte 5 von einer ersten Position 5a zu einer weiteren Position 5b kann ohne Fokussieraufwand eine Höhenablesung an einem im Wesentlichen scharf abgebildeten Code durchgeführt werden.

Das Abbildungsobjektiv 7 bildet Objekte der Messlatte 5 auf die Aufnahmeoberfläche 10 des Detektors 11 ab und eine Auswertungsvorrichtung stellt unter Verwendung der Detektorinformation eine Höheninformation zu einem abgebildeten Objekt bereit.

Von der Schnittlinie 9 aus liegen das Zentrum des Abbildungsobjektivs 7 in einem Objektivabstand und das Zentrum der Aufnahmeoberfläche 10 des Detektors 11 in einem Detektorabstand. Beide Zentren befinden sich im Wesentlichen in einer gemeinsamen Normalebene zur Schnittlinie, welche Normalebene auch die Ausrichtungsachse 2 umfasst.

Um zu gewährleisten, dass ein gewünschter Distanzbereich der Ausrichtungsachse 2 auf die Aufnahmeoberfläche 10 des Detektors 11 abgebildet wird, müssen die Winkel α und β, der Objektivabstand, der Detektorabstand und die Ausdehnung der Aufnahmeoberfläche 10 des Detektors 11 normal zur Schnittlinie 9 richtig gewählt werden. Dabei wird der Abbildungsmassstab durch die Wahl der Winkel α und β bestimmt. Weil der Winkel α vorzugsweise im Bereich von 80° bis 90°, in der dargestellten Ausführungsform im Wesentlichen bei 90° liegt, wird der Abbildungsmassstab im Wesentlichen vom Winkel β bestimmt.

Der Abbildungsmassstab und die Grösse der Aufnahmeoberfläche 10 des Detektors 11 normal zur Schnittlinie 9 hängen mit dem gewünschten Distanzbereich zusammen, so dass bei vorgegebenem Distanzbereich und bei einer vorgegebenen Grösse der Aufnahmeoberfläche 10 des Detektors 11 normal zur Schnittlinie 9 der Abbildungsmassstab und damit der Winkel β so gewählt werden muss, dass der gewünschten Distanzbereich auf die Aufnahmeoberfläche 10 abgebildet wird.

Nach der Wahl eines Objektivabstands kann entsprechend dem gewünschten Distanzbereich auch der für die richtige Abbildung benötigte Detektorabstand festgelegt werden.

Nach dem Festlegen der Winkel α und β, des Objektivabstand, des Detektorabstands und der Ausdehnung der Aufnahmeoberfläche des Detektors normal zur Schnittlinie kann die für eine scharfe Abbildung benötigte Brennweite des Abbildungsobjektivs festgelegt werden. Damit ein Punkt der Objektebene 6 von einer Linse scharf auf einen Punkt der Aufnahmeoberfläche 10 abgebildet wird, muss bei dieser Abbildung die Gegenstandsweite g, die Bildweite b und die Brennweite f des Abbildungsobjektivs 7 bzw. der Linse die Linsengleichung 1/f=1/g+1/b erfüllen. Entsprechend ist f=b*g/(b+g).

In der dargestellten Ausführungsform umfasst der Detektor 11 einen zweidimensionalen Sensorarray, der direkt bei der Aufnahmeoberfläche 10 angeordnet ist. Für ein scharf abgebildetes Objekt wird in einer ersten Richtung normal zur Schnittlinie 9 die Position auf der Ausrichtungsachse 2 und vorzugsweise quer dazu in einer zweiten Richtung eine Höheninformation des Objektes erfasst. Die Positionsbestimmung auf der Ausrichtungsachse 2 entspricht somit einer Triangulations-Distanzmessung. Die Bestimmung der Höheninformation kann gemäss einer beliebigen aus dem Stande der Technik bekannten Codeauswertung durchgeführt werden.

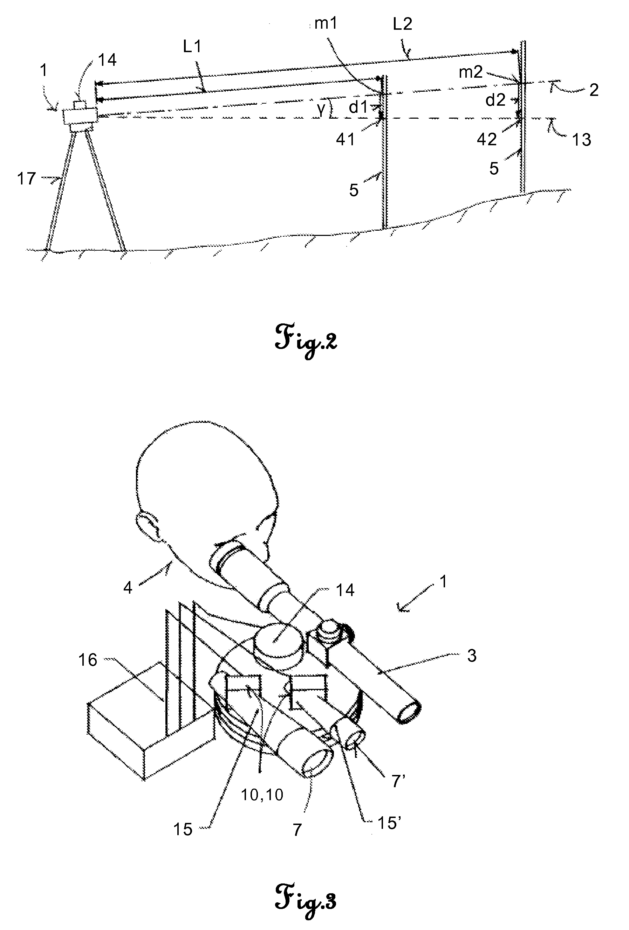

Fig. 2 zeigt eine Anordnung mit einem erfindungsgemässen Nivelliergerät 1, einem Dreibein 17 und einer Messlatte 5, bei der die Ausrichtungsachse 2 etwas von der exakten horizontalen Richtung 13 abweicht. Das Nivelliergerät 1 umfasst einen Neigungssensor 14, der mit der Auswertungsvorrichtung verbunden ist. Der Neigungssensor 14 bestimmt einen Abweichungswinkel γ zwischen der Ausrichtungsachse 2 und der horizontalen Ausrichtungslinie 13. Die bei der Ausrichtungsachse stehende Höheninformation m1 bzw. m2 stimmt nicht mit der effektiven Höhe überein. Die Auswertungsvorrichtung ermittelt aus dem Abweichungswinkel γ und Abständen L1 bzw. L2 Höhenkorrekturen d1 bzw. d2, wobei d1=L1*tan(γ) bzw. d2=L2*tan(γ). Die Abstände L1 bzw. L2 gehen aus der Triangulations-Distanzmessung mit kleinem Aufwand relativ genau hervor. Unter Berücksichtigung der Höhenkorrektur d1 bzw. d2 können sehr genaue Höhenwerte h1 bzw. h2 bestimmt werden.

Fig. 3 zeigt eine Ausführungsform des Nivelliergerätes 1 mit einer ersten und einer zweiten Abbildungsoptik 15,15', die je ein Abbildungsobjektiv 7,7' und einen eine Aufnahmeoberfläche aufweisenden Detektor 11,11' umfassen. Wenn der Bereich entlang der Ausrichtungsachse 2, welcher in der ersten Abbildungsoptik 15 auf die zugeordnete Aufnahmeoberfläche abgebildet wird, nicht genügt, so kann beispielsweise für einen Nahbereich die zweite Abbildungsoptik 15' eine Abbildung auf die zugeordnete Aufnahmeoberfläche des weiteren Detektors 11' gewährleisten. Dabei kann das zweite Abbildungssystem ebenso derart ausgebildet sein, dass gleichzeitig sämtliche innerhalb eines Erfassungsbereichs liegende Punkte der Objektebene scharf auf der Aufnahmeoberfläche des weiteren Detektors 11' abgebildet werden. Beispielsweise können Abbildungsobjektiv 7' und Detektor 11' - entsprechend Figur 1 - derart die Scheimpflug-Bedingung erfüllend angeordnet sein, dass sich auch die Objektivhauptebene des Abbildungsobjektivs 7', die Bildebene des Detektors 11' und die Objektebene in einer gemeinsamen Geraden schneiden.

Insbesondere können dabei die Abbildungsobjektive 7,7' der beiden für verschiedene Entfernungsbereiche ausgelegten Abbildungssysteme mit unterschiedlichen Brennweiten gewählt werden.

Gemäss einer alternativen Ausführungsform können die beiden Abbildungsoptiken 15,15' jedoch auch einem gemeinsamen Abbildungsobjektiv 7 nachgeordnet sein, wobei die Abbildungsoptiken 1515' auf zwei getrennte Detektoren 11,11' abbilden, insbesondere wobei unterschiedliche Winkel β und/oder unterschiedliche Detektorabstände gewählt sind.

Gemäss einer weiteren alternativen Ausführungsform werden von zwei unterschiedlichen Abbildungsobjektiven 7,7' Abbildungen nebeneinander auf die gleiche Aufnahmeoberfläche eines Detektors durchgeführt. Insbesondere kann dabei für die Ausrichtung der Objektivhauptebene des auf den näheren Distanzbereich gerichteten Abbildungsobjektivs ein Winkel α gewählt werden, der etwas kleiner als 90° ist.

Die Abbildungsparameter der zweiten Abbildungsoptik 15' werden so gewählt, dass Objekte eines anschliessenden Positionsbereichs auf die Aufnahmeoberfläche des zweiten Detektors 11' abgebildet werden. Eine Auswertungsvorrichtung 16 kann jeweils die Höheninformation des Detektors wählen, auf dessen Aufnahmeoberfläche ein Objekt mit einer Höheninformation abgebildet ist.

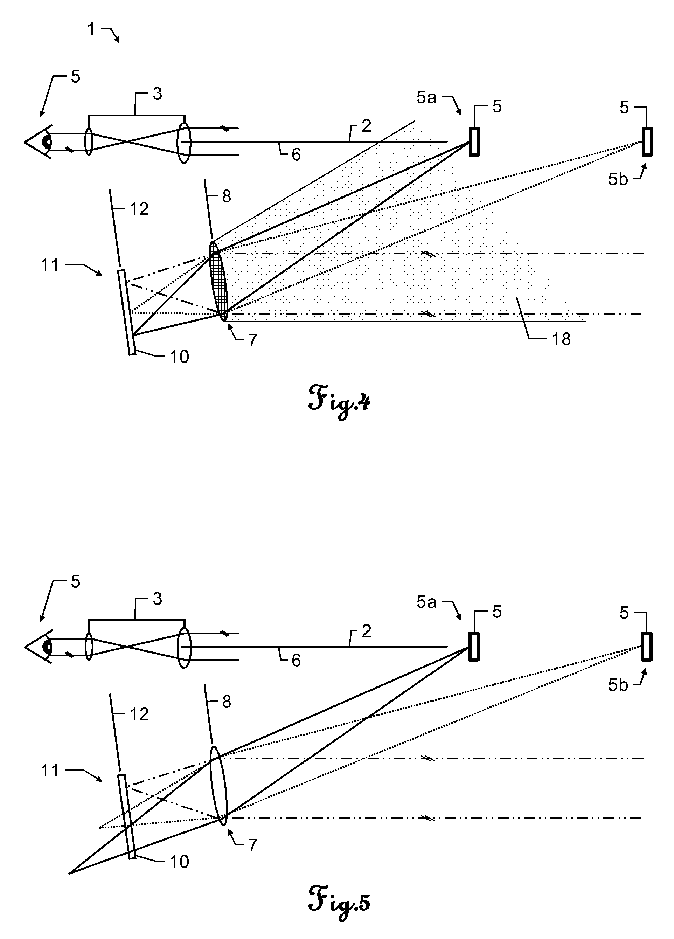

Figuren 4 und 5 zeigen jeweils ein Nivelliergerät, das dem in Figur 1 dargestellten Nivelliergerät ähnlich ist.

Das erfindungsgemässe digitale Nivelliergerät 1 aus Figur 4 weist wiederum ein von dem Abbildungsobjektiv 7 mit nachgeordnetem Detektor 11 räumlich getrenntes Zielfernrohr 3 auf. Die optische Achse des Zielfernrohrs 3 definiert die Ausrichtungsachse 2, die ihrerseits eine insbesondere vertikale Objektebene 6 aufspannt, wobei die Ausrichtungsachse 2 zur Höhenbestimmung eines Messpunktes auf eine dort aufgestellte Messlatte 5 ausrichtet ist. Die Messlatte 5 ist dabei in zwei möglichen, zu vermessenden Positionen 5a,5b dargestellt.

Durch die jeweilige Ausbildung und Anordnung des Abbildungsobjektivs 7 und des nachgeordneten Detektors 11 wird ein Erfassungsbereich als Winkelbereich, innerhalb wessen sich im Sichtfeld des Nivelliergeräts befindende Punkte auf der Aufnahmeoberfläche 10 des Detektors 11 abgebildet werden können, definiert.

Gemäss der Erfindung sind das Abbildungsobjektiv 7 und der Detektor 11 genau derart ausgebildet sowie genau derart relativ zueinander und zum die Objektebene 6 definierenden Zielfernrohr 3 angeordnet, dass gleichzeitig sämtliche innerhalb des Erfassungsbereichs 18 liegende Punkte der Objektebene 6 scharf auf der Aufnahmeoberfläche 10 des Detektors 11 abgebildet werden.

Dafür weist das in Figur 4 gezeigte Abbildungsobjektiv 7 eine winkelabhängig, insbesondere azimutwinkelabhängig, über den Erfassungsbereich 18 variierende Brennweite auf.

Beispielsweise ist das Abbildungsobjektiv 7 dafür mit einer Bildfeldwölbung in einer, insbesondere horizontalen, Achse ausgebildet. Alternativ oder zusätzlich kann des Abbildungsobjektiv 7 jedoch auch eine diffraktive Struktur, die eine einfallswinkelabhängige Variation der Brennweite des Abbildungsobjektiv 7 erzeugt, aufweisen. Geeignete Bildfeldwölbungen und diffraktive Strukturen wie etwa eine Gitterstruktur, sodass das Abbildungsobjektiv 7 eine entsprechende einfallswinkelabhängige Variation der Brennweite aufweist, sind dem Fachmann bekannt und können je nach Anforderung an das Nivelliergerät entsprechend gewählt werden.

Rein beispielhaft kann das Abbildungsobjektiv 7 derart relativ zum Zielfernrohr 3 und zum Detektor angeordnet sein, dass die Objektebene 6 und die Objektivhauptebene 8 einen Winkel α, der ungefähr im Bereich zwischen 80° und knapp unter 90° liegt, einschliessen sowie dass die Objektivhauptebene 8 in etwa parallel zur Bildebene 12 ausgerichtet ist.

Die von der in der ersten Position 5a befindlichen Messlatte 5 ausgehenden Abbildungslinien, die durchgezogen dargestellt sind, treffen dabei in einem ersten Einfallswinkel auf dem Abbildungsobjektiv 7 auf. Die von der in der zweiten Position 5b befindlichen Messlatte 5 ausgehenden Abbildungslinien, die gepunktet dargestellt sind, treffen hingegen in einem sich vom ersten unterscheidenden, zweiten Einfallswinkel auf dem Abbildungsobjektiv 7 auf. Die beispielhaft aus dem Unendlichen kommenden Abbildungslinien, die anhand der Strich-Punkt-Punkt-Linie dargestellt sind, treffen unter einem dritten Einfallswinkel auf dem Abbildungsobjektiv 7 auf.

Wie nun in Figur 4 ersichtlich ist, weist das Abbildungsobjektiv 7 für den ersten Einfallswinkel eine geringere Brennweite als für den zweiten Einfallswinkel auf, und für den dritten Einfallswinkel eine nochmals geringere Brennweite als für den zweiten Einfallswinkel. Insbesondere nimmt also die Brennweite dabei kontinuierlich über den Winkelverlauf des Erfassungsbereichs - von der zur Ausrichtungsachse zugewendeten Erfassungsbereichsgrenze hin zu der gegenüber der Ausrichtungsachse abgewandten Erfassungsbereichsgrenze - ab.

Figur 5 zeigt - rein zum besseren Verständnis der in Figur 4 dargestellten erfindungsgemässen Ausführungsform - die gleiche Anordnungsweise der Abbildungssystem-Komponenten wie in Figur 4, jedoch mit einem gewöhnlich ausgebildeten Abbildungsobjektiv 7 ohne winkelabhängig variierender Brennweite.

Wie aus Figur 5 nun ersichtlich ist, erlaubt ein gewöhnliches Abbildungsobjektiv 7 ohne winkelabhängig variierender Brennweite bei der dort dargestellten Anordnungsweise von Detektor 11 und Abbildungsobjektiv 7 hingegen keine gleichzeitige scharfe Abbildung sämtlicher innerhalb des Erfassungsbereichs liegenden Punkte der Objektebene 6 auf der Aufnahmeoberfläche 10 des Detektors 11.

Zur scharfen Abbildung der in der ersten Position 5a bzw. in der zweiten Position 5b dargestellten Messlatte wäre nun - wie bei Geräten des Standes der Technik - eine jeweils unterschiedlich weite Verschiebung entweder der Fokusposition des Abbildungsobjektivs 7 oder des Detektors 11 erforderlich. Dies birgt allerdings die Gefahr von Abweichungen in der Fokussierlinie, die auch Ablauffehler genannt werden. Gemäss der Erfindung ist hingegen - unabhängig von der Entfernung der anvisierten Messlatte - nur eine feste Fokusposition des Abbildungsobjektivs 7 bzw. des Detektors 11 vorgesehen, sodass keine fehleranfällige Verschiebungen von optischen Komponenten des Abbildungssystems erforderlich sind.

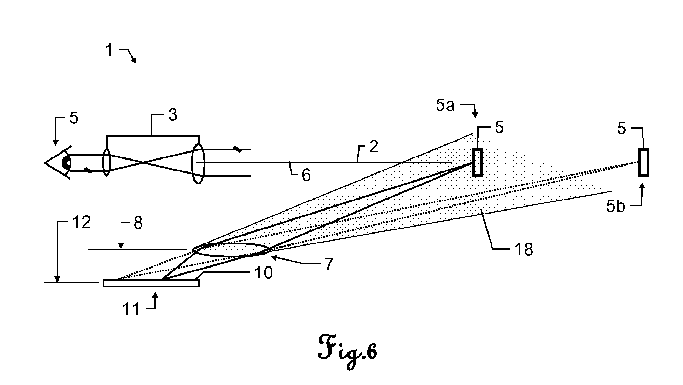

Figur 6 zeigt eine weitere alternative Ausführungsform eines digitalen Nivelliergeräts 1 gemäss der Erfindung, wobei die Ausbildungs- und Anordnungsweise des Abbildungsobjektivs 7 und des Detektors 11 insbesondere für einen begrenzten Nahbereich ausgelegt sind, da der Erfassungsbereich 18 in diesem Fall stark eingeschränkt ist.

Wie in Figur 6 ersichtlich, sind Abbildungsobjektiv 7, Detektor 11 und Fernrohr 3 derart relativ zueinander angeordnet, dass die Objektivhauptebene 8 und die Bildebene 12 parallel zueinander sowie jeweils parallel zur Objektebene 6 ausgerichtet sind. Darüber hinaus ist die Anordnungsweise von Abbildungsobjektiv 7 und Detektor 11 derart gewählt, dass die - zur Objektivhauptebene 8 bzw. Bildebene 12 - lotrechten optischen Achsen des Abbildungsobjektivs 7 und des Detektors 11 dabei verhältnismässig weit voneinander parallel versetzt angeordnet sind.

Das Abbildungsobjektiv 7 aus Figur 6 kann - wie gemäss Figur 1 - als Standard-Linse oder Standard-Linsengruppe ausgebildet sind. D.h., dass das Abbildungsobjektiv 7 bei dieser Anordnungsweise insbesondere keine einfallswinkelabhängig variierende Brennweite aufweist.

Auch diese spezielle Anordnungsweise gemäss der Erfindung gewährleistet nun, dass gleichzeitig sämtliche innerhalb des Erfassungsbereichs 18 liegende Punkte der Objektebene 6 scharf auf der Aufnahmeoberfläche 10 des Detektors 11 abgebildet werden. Insbesondere ist auch bei dieser Anordnungsweise die Scheimpflug-Bedingung erfüllt, da Bildebene 12, Hauptobjektivebene 8 und Objektebene 6 parallel zueinander liegen.

Die in Figur 6 gezeigte Anordnungsweise kann dabei insbesondere auch in einem erfindungsgemässen Nivelliergerät mit zwei oder mehreren getrennten Abbildungssystemen für jeweils unterschiedliche Entfernungsbereiche Anwendung finden. Beispielsweise kann erfindungsgemäss auch ein Nivelliergerät entsprechend jenem in Figur 3 bereitgestellt werden, wobei jedoch das für den Nahbereich ausgelegte Abbildungssystem der in Figur 6 gezeigten Ausbildungs- und Anordnungsweise von Abbildungsobjektiv 7 und Detektor 11 entspricht. Das für den Fernbereich ausgelegte Abbildungssystem kann hingegen entweder - wie etwa in Figur 1 gezeigt - eine Anordnungsweise aufweisen, wobei sich Bildebene 12, Hauptobjektivebene 8 und Objektebene 6 in einer Geraden schneiden, oder alternativ - entsprechend Figur 4 - mit einem Abbildungsobjektiv 7 mit einfallswinkelabhängig variierender Brennweite ausgeführt sein.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Nivelliergerät (1) mit
- einer Ausrichtungsachse (2), welche zur Höhenbestimmung auf eine Messlatte (5) ausrichtbar ist,
- einem Abbildungsobjektiv (7), dem eine Objektivhauptebene (8) zugeordnet ist,
- einem Detektor (11), mit einer in einer Bildebene (12) liegenden Aufnahmeoberfläche (10), und
- einer Auswertungsvorrichtung (16), die mit dem Detektor (11) verbunden ist,
wobei durch das Abbildungsobjektiv (7) Objekte innerhalb eines Erfassungsbereichs (18) auf die Aufnahmeoberfläche (10) des Detektors (11) abbildbar und durch die Auswertungsvorrichtung (16) unter Verwendung der Detektorinformation eine Höheninformation zu einem abgebildeten Objekt bereitstellbar sind,
**dadurch gekennzeichnet, dass**
das Abbildungsobjektiv (7) und der Detektor (11) derart ausgebildet sowie derart relativ zueinander und zu einer die Ausrichtungsachse (2) enthaltenden Objektebene (6) angeordnet sind, dass gleichzeitig sämtliche innerhalb des Erfassungsbereichs (18) liegende Punkte der Objektebene (6) scharf auf der Aufnahmeoberfläche (10) des Detektors (11) abgebildet werden.

2. Nivelliergerät (1) nach Anspruch 1,
**dadurch gekennzeichnet, dass**
das Abbildungsobjektiv (7) eine winkelabhängig, insbesondere azimutwinkelabhängig, über den Erfassungsbereich (18) variierende Brennweite aufweist,
im Speziellen wobei das Abbildungsobjektiv (7)
- eine Bildfeldwölbung in einer, insbesondere horizontalen, Achse oder
- eine winkelabhängig variierende diffraktive Struktur
aufweist.

3. Nivelliergerät (1) nach Anspruch 1,
**dadurch gekennzeichnet, dass**
das Abbildungsobjektiv (7) und der Detektor (11) derart relativ zueinander und relativ zur Ausrichtungsachse (2) angeordnet sind, dass
- die Objektivhauptebene (8),
- die Bildebene (12) und
- die Objektebene (6),
die Scheimpflug-Bedingung erfüllend, parallel zueinander ausgerichtet sowie dass die - zur Objektivhauptebene (8) bzw. Bildebene (12) - lotrechten optischen Achsen des Abbildungsobjektivs (7) und des Detektors (11) mit einem Versatz voneinander beabstandet angeordnet sind.

4. Nivelliergerät (1) nach Anspruch 1,
**dadurch gekennzeichnet, dass**
sich, die Scheimpflug-Bedingung erfüllend,
- die Objektivhauptebene (8),
- die Bildebene (12) und
- die Objektebene (6)
in einer gemeinsamen Schnittlinie (9) schneiden,
wobei zwischen der Objektebene (6) und der Objektivhauptebene (8) ein Winkel α sowie zwischen der Objektivhauptebene (8) und der Bildebene (12) ein Winkel β ausgebildet ist.

5. Nivelliergerät (1) nach Anspruch 4,
**dadurch gekennzeichnet, dass**
das Zentrum des Abbildungsobjektivs (7) in einem Objektivabstand und das Zentrum der Aufnahmeoberfläche (10) des Detektors (11) in einem Detektorabstand von der Schnittlinie (9) beabstandet sind und beide Zentren im Wesentlichen in einer gemeinsamen Normalebene zur Schnittlinie (9) liegen, welche Normalebene auch die Ausrichtungsachse (2) umfasst.

6. Nivelliergerät (1) nach Anspruch 4 oder 5,
**dadurch gekennzeichnet, dass**
die Winkel α und β, der Objektivabstand, der Detektorabstand und die Ausdehnung der Aufnahmeoberfläche (10) des Detektors (11) normal zur Schnittlinie (9) entsprechend einem abzubildenden Distanzbereich auf der Ausrichtungsachse (2) gewählt sind, wobei der Abbildungsmassstab durch die Wahl der Winkel α und β bestimmt ist und der Winkel α vorzugsweise im Bereich von 80° bis 90°, insbesondere im Wesentlichen bei 90° liegt.

7. Nivelliergerät (1) nach Anspruch 6,
**dadurch gekennzeichnet, dass**
g die Gegenstandsweite und b die Bildweite ist, welche der Abbildung eines Punktes der Objektebene (6) auf einen Punkt der Aufnahmeoberfläche (10) des Detektors (11) entsprechen und dass das Abbildungsobjektiv (7) eine Brennweite f hat, welche durch die Gleichung 1/f=1/g+1/b bestimmt ist.

8. Nivelliergerät (1) nach einem der Ansprüche 1 bis 7,
**dadurch gekennzeichnet, dass**
der Detektor (11) einen zweidimensionalen Sensorarray umfasst, wobei in einer ersten Richtung des Sensorarrays für ein scharf abgebildetes Objekt die Position auf der Ausrichtungsachse (2) und quer dazu in einer zweiten Richtung eine Höheninformation des Objektes erfassbar ist.

9. Nivelliergerät (1) nach einem der Ansprüche 1 bis 8,
**dadurch gekennzeichnet, dass**
ein Neigungssensor (14) mit der Auswertungsvorrichtung (16) verbunden ist, wobei der Neigungssensor (14) einen Abweichungswinkel γ zwischen der Ausrichtungsachse (2) und einer horizontalen Ausrichtungslinie (13) bereitstellt und die Auswertungsvorrichtung (16) die Höheninformation unter Verwendung des Abweichungswinkels γ und der Position des abgebildeten Objekts auf der Ausrichtungsachse (2) bereitstellt.

10. Nivelliergerät (1) nach einem der Ansprüche 1 bis 9,
**dadurch gekennzeichnet, dass**
mindestens ein weiteres Abbildungssystem vorgesehen ist mit
- mindestens einem weiteren Detektor (11'), dessen weitere Aufnahmeoberfläche in einer weiteren Bildebene liegt, und
- einem dem weiteren Detektor (11') vorgeordneten weiteren Abbildungsobjektiv (7'), dem eine weitere Objektivhauptebene zugeordnet ist,
wobei das weitere Abbildungsobjektiv (7') und der weitere Detektor (11') derart ausgebildet sowie derart relativ zueinander und zur Objektebene (6) angeordnet sind, dass gleichzeitig sämtliche innerhalb eines Erfassungsbereichs des weiteren Abbildungssystems liegende Punkte der Objektebene (6) scharf auf der weiteren Aufnahmeoberfläche des weiteren Detektors (11') abgebildet werden,
und wobei die Auswertungsvorrichtung (16) unter Verwendung der Information des weiteren Detektors (11') eine Höheninformation zu einem abgebildeten Objekt bereitstellt.

11. Nivelliergerät (1) nach einem der Ansprüche 1 bis 10,
**dadurch gekennzeichnet, dass**
die Ausrichtungsachse (2) die optische Achse eines Fernrohrs (3) ist und die Fernrohroptik vom Abbildungsobjektiv (7) räumlich getrennt ist.

12. Verfahren zum Nivellieren mit einer Messlatte (5), die Höheninformationen umfasst, und einem Nivelliergerät (1) nach einem der Ansprüche 1 bis 11, wobei die Ausrichtungsachse (2) des Nivelliergerätes (1) auf die Messlatte (5) gerichtet und die vom Detektor (11) und der Auswertungsvorrichtung (16) ermittelte Höheninformation der Messlatte (5) auf der Höhe der Ausrichtungsachse (2) als Messhöhe bereitgestellt wird,
**dadurch gekennzeichnet, dass**
bei der Bestimmung der Messhöhe die abgebildete Höheninformation zumindest teilweise in der Objektebene (6) des Nivelliergerätes (1) liegt und dass das Abbildungsobjektiv (7) und der Detektor (11) derart ausgebildet sowie derart relativ zueinander und zur Objektebene (6) angeordnet sind, dass gleichzeitig sämtliche innerhalb des Erfassungsbereichs (18) liegende Punkte der Objektebene (6) scharf auf der Aufnahmeoberfläche (10) des Detektors (11) abgebildet werden.

13. Verfahren nach Anspruch 12,
**dadurch gekennzeichnet, dass**
- die innerhalb des Erfassungsbereichs (18) liegenden Punkte der Objektebene (6) durch das Abbildungsobjektiv (7) mit einer einfallswinkelabhängig variierenden Brennweite auf die Aufnahmeoberfläche (10) abgebildet werden,
- sich die Objektebene (6), die Objektivhauptebene (8) sowie die Bildebene (12) in einer gemeinsamen Schnittlinie (9) schneiden oder
- die die Objektebene (6), Objektivhauptebene (8) sowie die Bildebene (12) parallel zueinander ausgerichtet und die - zur Objektivhauptebene (8) bzw. Bildebene (12) - lotrechten optischen Achsen des Abbildungsobjektivs (7) und des Detektors (11) mit einem Versatz voneinander beabstandet angeordnet sind.

14. Verfahren nach Anspruch 12 oder 13,
**dadurch gekennzeichnet, dass**
der Detektor (11) einen zweidimensionalen Sensorarray umfasst und in einer ersten Richtung des Sensorarrays für ein scharf abgebildetes Objekt die Position auf der Ausrichtungsachse (2) und quer dazu in einer zweiten Richtung eine Höheninformation des Objektes erfasst wird.

15. Verfahren nach einem der Ansprüche 12 bis 14,
**dadurch gekennzeichnet, dass**
ein Neigungssensor (14) einen Abweichungswinkel γ zwischen der Ausrichtungsachse (2) und einer horizontalen Ausrichtungslinie (13) erfasst und die Höheninformation unter Verwendung des Abweichungswinkels γ und der Position des abgebildeten Objekts auf der Ausrichtungsachse (2) bestimmt wird.

16. Verfahren nach einem der Ansprüche 12 bis 15,
**dadurch gekennzeichnet, dass**
die gleiche Höhenmessung mit mindestens zwei Wellenlängen durchgeführt und aus den gefundenen Messdifferenzen ein theoretischer Höhenwert im Vakuum extrapoliert wird, sodass der Effekt von Brechungsindexschwankungen in der Luft kompensiert wird.
